# EUROPEAN PATENT SPECIFICATION

(11) **EP 2 961 300 B1**
(45) Date of publication and mention of the grant of the patent: **15.02.2017**
(21) Application number: 14716007.1
(22) Date of filing: 03.03.2014
(51) Int. Cl.: A47J 36/08

(54) **PIERCED LID FOR SAUCEPANS FOR COOKING BY REFLECTION PROVIDED WITH A SYSTEM FOR STEAM FLOW REGULATION**
PERFORIERTER DECKEL FÜR TÖPFE ZUM KOCHEN MITTELS REFLEXION MIT EINEM SYSTEM ZUR DAMPFSTRÖMUNGSREGULIERUNG
COUVERCLE PERFORÉ POUR CASSEROLES POUR CUISSON PAR RÉFLEXION POURVU D'UN SYSTÈME PERMETTANT LA RÉGULATION DE LA VAPEUR

(30) Priority: 01.03.2013 IT VB20130001 U
(43) Date of publication of application: 06.01.2016
(73) Proprietor: Chiarelli, Daniele, 28891 Nonio (Verbania) (IT)
(72) Inventor: Chiarelli, Daniele, 28891 Nonio (Verbania) (IT)
(74) Representative: Leoncini, Alberto
(86) International application number: PCT/IB2014/059389
(87) International publication number: WO 2014/132245

(56) References cited:
- DE-U1-202006 016 517
- GB-A- 2 093 333
- US-A1- 2004 079 755

## Description

### Technical Field

The present invention refers to a pierced lid for saucepans usable with different kinds of saucepans for cooking by reflection.
In particular the invention refers to a molded metal lid.

### Prior Art

It is known in the field to use metal pierced lids for saucepans provided with a plate for cooking food by reflection, said lids allowing to drain steam through holes of the lid.
GB 2093333A discloses a cooking vessel comprising a body constructed to contain a liquid and having a handle projecting therefrom, and also comprising a lid arranged to fit an otherwise open top of said body, wherein means is provided for releasably retaining the lid in position on the body, the lid being formed with an array of holes and being provided with a shutter manually displaceable between a position in which it non-sealingly masks said holes to retard any flow of fluid therethrough and a position in which said holes are unmasked.
Nevertheless, the known lids suffer from several drawbacks, particularly regarding the possibility of using the same lid both for cooking by reflection and for traditional cooking.

### Summary of the Invention

The object of the invention is to provide a lid for saucepans usable both with saucepans for traditional cooking and for cooking by reflection.

According to the invention, this object is achieved by means of a lid for saucepans provided with a system for steam flow regulation according to the characterizing part of claim 1.

### Brief Description of the Drawings

These and other characteristics and advantages of the present invention will become more readily apparent from the following detailed description of preferred embodiments, given only as non-limiting examples, with reference to the appended drawings which illustrate the invention and in which:
- Figure 1 shows a side view of a section of an embodiment of the lid for saucepans according to the invention;
- Figure 2 shows a side view of a section of another embodiment of the lid for saucepans according to the invention;
- Figures 3A and 3B show a top view and a side view in section, respectively, of a detail of the lid for saucepans according to an embodiment the invention; and
- Figures 4A and 4B show a top view and a side view in section, respectively, of a detail of the lid for saucepans according to another embodiment of the invention.

### Description of Preferred Embodiments of the Invention

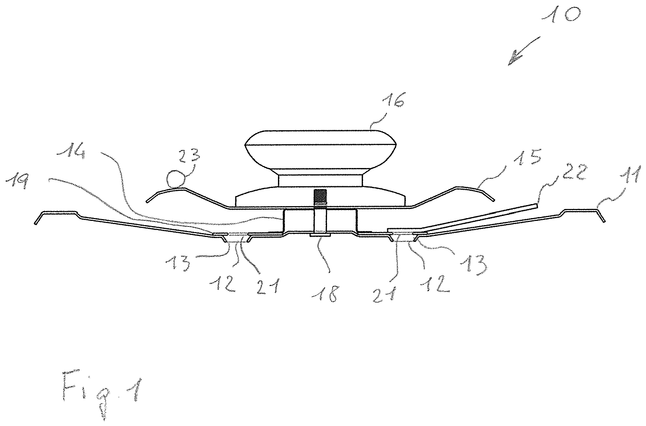

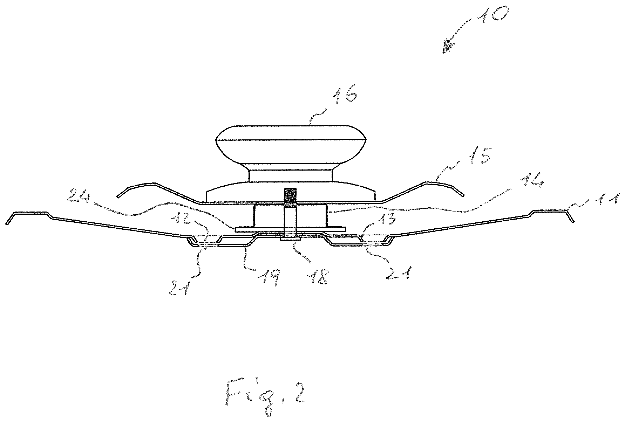

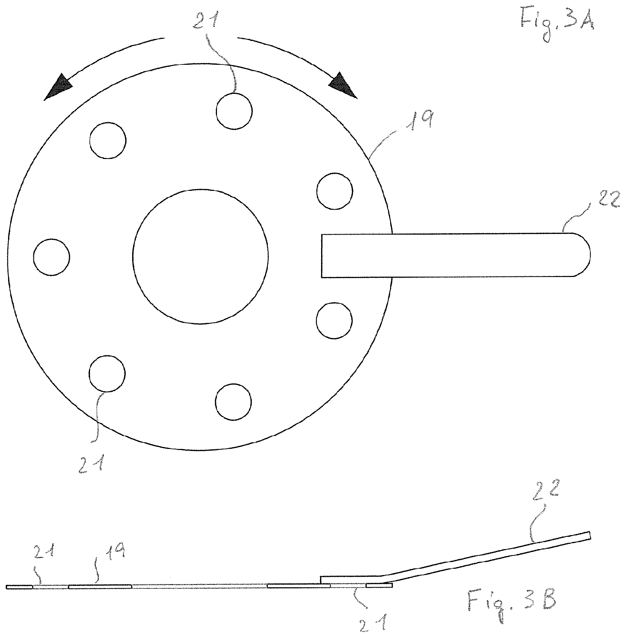

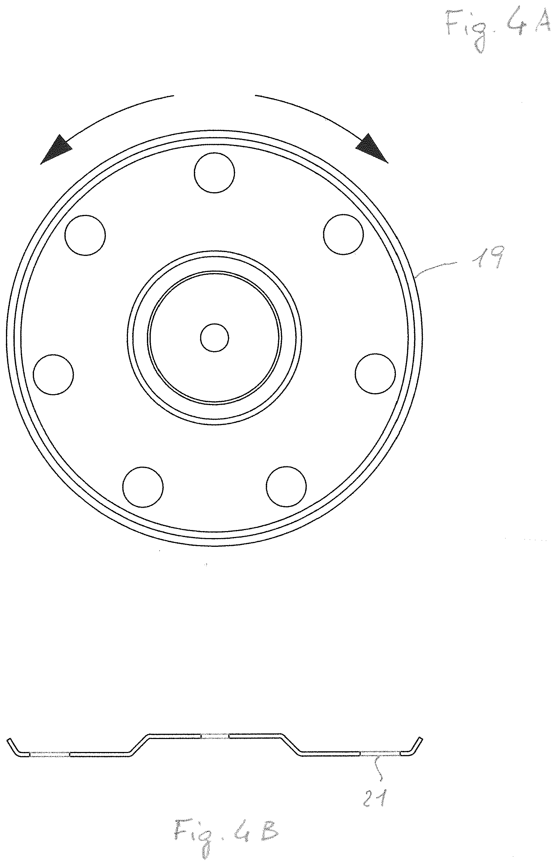

With reference to the Figures, a lid 10 according to the preferred embodiment of the invention comprises a pierced lid 11, for example a metal lid made of stainless steel or aluminum, on which a plurality of holes 12 are formed.
Preferably the holes 12 have conical section, with inclined walls 13, and the pierced lid 11 and the holes 12 are formed by molding.
Preferably the holes 12 are equidistant relative to one another and are made with their centers arranged on a circumference concentric to the pierced lid 11; for example the pierced lid 11 comprises seven holes.
The lid 10 of the invention further comprises a plate 15, known in the field, and a spacer 14 mounted between the plate 15 and the pierced lid 11.
Preferably the spacer 14 has a cylindrical shape; the pierced lid 11 and the plate 15 have preferably a circular shape and are formed with variable bends that provide strength and a unique design.
The pierced lid 11, the spacer 14 and the plate 15 are assembled together by a screw 18 screwed into a knob 16.
The screw 18 is mounted so as to pass through holes made in the pierced lid 11, in the spacer 14 and in the plate 15; the pierced lid 11, the spacer 14 and the plate 15 are held between the head of the screw 18, which is mounted resting on the pierced lid 11, and the knob 16, which is screwed on the screw 18 until it comes to rest on the plate 15.
In the embodiments of the invention shown in Figures 1 and 2 the lid 10 further comprises a flow regulator 19, mounted resting on the pierced lid 11.
Preferably the flow regulator 19 is mounted between the pierced lid 11 and the spacer 14.
A plurality of adjustment holes 21, shown in Fig. 3A and 3B, are formed on the flow regulator 19 in correspondence with the holes 12 of the pierced lid 11.
Preferably the adjustment holes 21 are equidistant relative to one another and have their centers arranged on a circumference concentric to the flow regulator 19.
A hole is formed through the flow regulator 19, preferably in its center, for the passage of the screw 18.
The pierced lid 11, the flow regulator 19, the spacer 14 and the plate 15 are assembled together by the screw 18 screwed into the knob 16.
The flow regulator 19 is rotatably mounted about the axis of the screw 18, in order to enable the opening or the closing of the holes 12 for allowing the regulation of the passage of steam by rotating the flow regulator 19, so that the adjustment holes 21 overlap the holes 12 of the pierced lid 11 when the passage of steam is to be allowed, and the holes 12 are closed when they are covered by a part of the flow regulator 19 which is not pierced.
Preferably the lid 10 of the invention comprises regulating means adapted to block the flow regulator 19 in a predetermined position allowing to keep the holes 12 of the pierced lid 11 open or closed.
For example the regulating means may consist of a latch that is formed on the pierced lid 11 and can be locked at the two ends of a slot formed on the flow regulator 19.
Preferably the flow regulator 19 can be rotated by means of actuating means, for example by means of a lever 22 connected thereto.
In an embodiment of the lid 10 of the invention the flow regulator 19, the spacer 14 and the plate 15 are connected together, for example by welding, in order to allow the rotation of the flow regulator 19, and therefore the regulation of the passage of steam flow through the holes 12 and the adjustment holes 21, by means of a little knob 23 connected or welded to the plate 15.
The lid 10 in a second embodiment of the invention shown in Figure 2 comprises a flow regulator 19, shown in Fig. 4A and 4B, mounted between the pierced lid 11 and the head of the screw 18.
The pierced lid 11, the flow regulator 19, the spacer 14 and the plate 15 are assembled together by the screw 18 screwed into the knob 16.
Optionally, in the second embodiment of the invention the lid 10 comprises a gasket 24 placed between the spacer 14 and the pierced lid 11 and made for example of alimentary silicone.
Preferably the flow regulator 19 and the screw 18 are connected together, for example by welding, in order to allow the rotation of the flow regulator 19, and therefore the regulation of the passage of the steam flow through the holes 12 and the adjustment holes 21, by means of the knob 16.

In operation, the steam flow passing through the holes 12 of the pierced lid 11 and through the adjustment holes 21 is adjusted by rotating the flow regulator 19.
The flow regulator 19 is rotatable about the axis of the screw 18 by means of the actuating means, for example by means of the lever 22 connected thereto or by means of the little knob 23 connected to the plate 15.
In the second embodiment of the invention the flow regulator 19 is rotatable about the axis of the screw 18 by means of the knob 16, through the screw 18 connected thereto. Advantageously the flow regulator 19 according to the invention allows to adjust the steam flow passing through the holes 12 of the pierced lid 11 and through the adjustment holes 21 of the flow regulator 19.
Thanks to the regulating means one can effect the complete opening or closing of the holes 12 or provide for intermediate adjustments, thus allowing the use of the lid for traditional cooking, when the holes 12 are closed, and for cooking by reflection, when the holes 12 are open or partially open.

## Claims

1. Lid for saucepans (10) comprising:
- a pierced lid (11) with a plurality of through holes (12);
- a plate (15);
- a spacer (14) mounted between the plate (15) and the pierced lid (11);
- a screw (18) mounted so as to pass through holes made in the pierced lid (11), in the spacer (14) and in the plate (15) and screwed into a knob (16);
wherein the pierced lid (11), the spacer (14) and the plate (15) are held assembled between the head of the screw (18), which is mounted resting on the pierced lid (11), and the knob (16), which is screwed on the screw (18) until it comes to rest on the plate (15), the lid (10) further comprising a flow regulator (19) mounted resting on the pierced lid (11) and having a plurality of adjustment through holes (21), said flow regulator (19) being rotatably mounted about the axis of the screw (18), so that the adjustment holes (21) overlap the holes (12) of the pierced lid (11) for enabling the opening or the closing of the holes (12) by rotating the flow regulator (19), thus allowing the regulation of the passage of the steam through the holes (12), **characterized in that** it further comprises actuating means (23) connected to the plate (15), wherein the flow regulator (19), the spacer (14) and the plate (15) are connected together in order to allow the rotation of the flow regulator (19), and therefore the regulation of the passage of the steam flow through the holes (12) and the adjustment holes (21), by means of said actuating means (23).

2. Lid for saucepans (10) according to claim 1, **characterized in that** the flow regulator (19) is mounted between the pierced lid (11) and the spacer (14).

3. Lid for saucepans (10) according to claim 1 or 2, **characterized in that** it further comprises actuating means (22) connected to the flow regulator (19).

4. Lid for saucepans (10) according to any of the preceding claims, **characterized in that** the flow regulator (19) is mounted between the pierced lid (11) and the head of the screw (18).

5. Lid for saucepans (10) according to claim 4, **characterized in that** the flow regulator (19) and the screw (18) are connected together in order to allow the rotation of the flow regulator (19) by means of the knob (16).

6. Lid for saucepans (10) according to claim 4 or 5, **characterized in that** it further comprises a gasket (24) placed between the spacer (14) and the pierced lid (11).

7. Lid for saucepans (10) according to any of the preceding claims, **characterized in that** the holes (12) are conical holes.

8. Lid for saucepans (10) according to any of the preceding claims, **characterized in that** it further comprises regulating means adapted to block the flow regulator (19) in a predetermined position.

9. Lid for saucepans (10) according to any of the preceding claims, **characterized in that** the regulating means consist of a latch formed on the pierced lid (11) and adapted to be locked in a slot formed on the flow regulator (19) .

## Patentansprüche

1. Deckel für Töpfe (10), der Folgendes enthält:
- einen perforierten Deckel (11) mit mehreren durchgehenden Löchern (12);
- eine Platte (15);
- ein Distanzstück (14), das zwischen der Platte (15) und dem perforierten Deckel (11) montiert ist;
- eine Schraube (18), die durch die im perforierten Deckel (11), im Distanzstück (14), und in der Platte (15) erhaltenen Löcher durchgehend montiert und an einem Kugelgriff (16) angeschraubt ist;
wobei der perforierte Deckel (11), das Distanzstück (14) und die Platte (15) zwischen dem Kopf der Schraube (18), die am perforierten Deckel (11) liegt, und dem Kugelgriff (16), der an der Schraube (18) angeschraubt ist, bis er die Platte (15) als Auflage erreicht, zusammengehalten werden, der Deckel (10) enthält außerdem einen Durchflussregler (19), der als Auflage am perforierten Deckel (11) montiert ist und der mehrere durchgehende Regulierungslöcher (21) hat, der genannte Durchflussregler (19) ist so an der Achse der Schraube (18) montiert, dass er sich um sie drehen kann, sodass sich die Regulierungslöcher (21) an den Löchern (12) des perforierten Deckels (11) befinden, um die Öffnung oder die Schließung der Löcher(12) durch die Drehung des Durchflussreglers (19) zu ermöglichen und auf diese Weise die Dampfströmungsregulierung durch die Löcher (12) ermöglichen, und ist **dadurch gekennzeichnet, dass** er außerdem Antriebsvorrichtungen (23) enthält, die mit der Platte (15) verbunden sind, in denen der Durchflussregler (19), das Distanzstück (14) und die Platte (15) miteinander verbunden sind, um die Drehung des Durchflussreglers (19) und damit die Dampfströmungsregulierung durch die Löcher (12) und die Regulierungslöcher (21) durch die genannten Antriebsvorrichtungen (23) zu ermöglichen.

2. Deckel für Töpfe (10) gemäß Patentanspruch 1, der **dadurch gekennzeichnet ist, dass** der Durchflussregler (19) zwischen dem perforierten Deckel (11) und dem Distanzstück (14) montiert ist.

3. Deckel für Töpfe (10) gemäß Patentanspruch 1 oder 2, der **dadurch gekennzeichnet ist, dass** er außerdem Antriebsvorrichtungen (22) enthält, die mit dem Durchflussregler (19) verbunden sind.

4. Deckel für Töpfe (10) gemäß Patentanspruch 1, der **dadurch gekennzeichnet ist, dass** der Durchflussregler (19) zwischen dem perforierten Deckel (11) und dem Kopf der Schraube (18) montiert ist.

5. Deckel für Töpfe (10) gemäß Patentanspruch 4, der **dadurch gekennzeichnet ist, dass** der Durchflussregler (19) und die Schraube (18) miteinander verbunden sind, um die Drehung des Durchflussreglers (19) durch den Kugelgriff (16) zu ermöglichen.

6. Deckel für Töpfe (10) gemäß Patentanspruch 4 oder 5, der **dadurch gekennzeichnet ist, dass** er außerdem eine Dichtung (24) enthält,die zwischen dem Distanzstück (14) und dem perforierten Deckel (11) angebracht ist.

7. Deckel für Töpfe (10) gemäß einem der vorhergehenden Patentansprüche, der **dadurch gekennzeichnet ist, dass** die Löcher (12) kegelförmige Löcher sind.

8. Deckel für Töpfe (10) gemäß einem der vorhergehenden Patentansprüche, der **dadurch gekennzeichnet ist, dass** er außerdem Regulierungsvorrichtungen enthält, die dazu dienen, den Durchflussregler (19) in einer bestimmten Position zu blockieren.

9. Deckel für Töpfe (10) gemäß einem der vorhergehenden Patentansprüche, der **dadurch gekennzeichnet ist, dass** die Regulierungsvorrichtungen aus einer Feststellvorrichtung bestehen, die am perforierten Deckel (11) erhalten wurde, welche dazu dient, an einer Öse blockiert zu werden, die am Durchflussregler (19) angebracht wurde.

## Revendications

1. Couvercle pour casseroles (10) comprenant :
- un couvercle perforé (11) avec une pluralité de trous (12) traversants ;
- un plateau (15) ;
- une entretoise (14) montée entre le plateau (15) et le couvercle perforé (11);
- une vis (18) qui traverse le couvercle perforé (11), l'entretoise (14) et le plateau (15) et qui est serrée dans un bouton (16) ;
où le couvercle perforé (11), l'entretoise (14) et le plateau (15) sont maintenus assemblés entre la tête de la vis (18), montée en appui au couvercle perforé (11), et le bouton (16) dans lequel la vis (18) est serrée jusqu'en appui au plateau (15) ; le couvercle (10) comprend aussi un régulateur de flux (19) qui est monté en appui au couvercle perforé (11) et est doté d'une pluralité de trous de réglage (21) traversants ; ce régulateur de flux (19) peut tourner autour de l'axe de la vis (18), de sorte que les trous de réglage (21) se positionnent au niveau des trous (12) du couvercle perforé (11) pour assurer la sortie de la vapeur ; le couvercle comprend des moyens d'actionnement (23) reliés au plateau (15) ; le régulateur de flux (19), l'entretoise (14) et le plateau (15) sont reliés entre eux, pour permettre la rotation du régulateur de flux (19), et donc le réglage du passage du flux de vapeur à travers les trous (12) du couvercle et les trous de réglage (21), on a prévu des moyens d'actionnement (23).

2. Couvercle pour casseroles (10), selon la revendication 1, **caractérisé en ce que** le régulateur de flux (19) est monté entre le couvercle perforé (11) et l'entretoise (14).

3. Couvercle pour casseroles (10), selon la revendication 1 ou 2, **caractérisé en ce qu'**il comprend aussi des moyens d'actionnement (23) reliés au régulateur de flux (19).

4. Couvercle pour casseroles (10), selon la revendication 1, **caractérisé en ce que** le régulateur de flux (19) est monté entre le couvercle perforé (11) et la tête de la vis (18).

5. Couvercle pour casseroles (10), selon la revendication 4, **caractérisé en ce que** le régulateur de flux (19) et la vis (18) sont reliés entre eux pour permettre la rotation du régulateur de flux (19) à l'aide du bouton (16).

6. Couvercle pour casseroles (10), selon la revendication 4 ou 5, **caractérisé en ce qu'**il comprend aussi un joint (24) situé entre l'entretoise (14) et le couvercle perforé (11).

7. Couvercle pour casseroles (10) selon l'une des revendications précédentes, **caractérisé en ce que** les trous (12) sont des trous coniques.

8. Couvercle pour casseroles (10) selon l'une des revendications précédentes, **caractérisé en ce qu'**il comprend aussi des moyens de réglage servant à bloquer le régulateur de flux (19) dans une position.

9. Couvercle pour casseroles (10) selon l'une des revendications précédentes, **caractérisé en ce que** les moyens de réglage sont constitués d'une patte située sur le couvercle perforé (11) que l'on peut bloquer sur une fente réalisée sur le régulateur de flux (19).
